(19) Europäisches Patentamt
European Patent Office
Office européen des brevets

(11) Veröffentlichungsnummer: **0 320 632 B1**

(12) # EUROPÄISCHE PATENTSCHRIFT

(45) Veröffentlichungstag der Patentschrift: **11.11.92**

(51) Int. Cl.[5]: **C08K 5/3475**, B32B 27/36, B32B 27/18

(21) Anmeldenummer: **88119076.3**

(22) Anmeldetag: **17.11.88**

Die Akte enthält technische Angaben, die nach dem Eingang der Anmeldung eingereicht wurden und die nicht in dieser Patentschrift enthalten sind.

(54) **Beschichtete Formkörper und ein Verfahren zu ihrer Herstellung.**

(30) Priorität: **24.11.87 DE 3739765**

(43) Veröffentlichungstag der Anmeldung:
**21.06.89 Patentblatt 89/25**

(45) Bekanntmachung des Hinweises auf die Patenterteilung:
**11.11.92 Patentblatt 92/46**

(84) Benannte Vertragsstaaten:
**AT DE ES FR GB IT NL**

(56) Entgegenhaltungen:
**EP-A- 180 992**
**EP-A- 247 480**
**EP-A- 284 865**
**EP-A- 0 110 221**
**DE-A- 1 670 951**

(73) Patentinhaber: **BAYER AG**

**W-5090 Leverkusen 1 Bayerwerk(DE)**

(72) Erfinder: **Hähnsen, Heinrich, Dr.**
**Homberger Strasse 16**
**W-4100 Duisburg 14(DE)**
Erfinder: **Nising, Wolfgang, Dr.**
**Mainstrasse 4**
**W-5205 St. Augustin 2(DE)**
Erfinder: **Scholl, Thomas, Dr.**
**Witzfeldstrasse 47a**
**W-4005 Meerbusch 1(DE)**
Erfinder: **Buysch, Hans-Josef, Dr.**
**Brandenburger Strasse 28**
**W-4150 Krefeld 11(DE)**
Erfinder: **Grigo, Ulrich, Dr.**
**Michelsheide 9**
**W-4152 Kempen 3(DE)**

EP 0 320 632 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind mit einer 5 µm bis 100 µm, vorzugsweise 20 µm bis 50 µm dicken Schicht aus linearen, thermoplastischen, Si-freien Polycarbonaten beschichtete Formkörper aus linearen, thermoplastischen, Si-freien Polycarbonaten, die dadurch gekennzeichnet sind, daß die Schicht 0,1 Gew.-% bis 20 Gew.-%, vorzugsweise 2 Gew.-% bis 15 Gew.-% und insbesondere 5 Gew.-% bis 10 Gew.-% an UV-Absorbern der Formel I

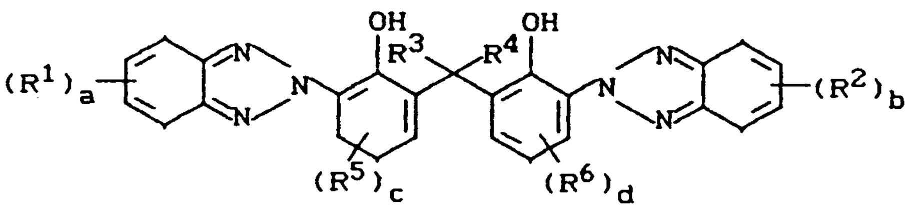

(I)

enthält, worin

| | |
|---|---|
| $R^1$ und $R^2$ | gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -$OR^7$ oder -$COOR^7$ bedeuten, mit $R^7$ = H, $C_1$-$C_{10}$-Alkyl, $C_5$-$C_{10}$-Cycloalkyl, $C_7$-$C_{13}$-Aralkyl, $C_6$-$C_{14}$-Aryl, |
| $R^3$ und $R^4$ | gleich oder verschieden sind und H, $C_1$-$C_{15}$-Alkyl, $C_5$-$C_6$-Cycloalkyl, $C_7$-$C_{20}$-Aralkyl oder $C_6$-$C_{14}$-Aryl bedeuten, |
| $R^5$ und $R^6$ | gleich oder verschieden sind und $C_2$-$C_{15}$-Alkyl, $C_5$-$C_{10}$-Cycloalkyl, $C_7$-$C_{20}$-Aralkyl, $C_6$-$C_{14}$-Aryl, -$OR^7$ oder -$COOR^7$ bedeuten, |
| a, b | gleich oder verschieden und 1, 2, 3 oder 4 sind und |
| c, d | gleich oder verschieden und 1, 2 oder 3 sind. |

Bevorzugte Reste $R^1$ und $R^2$ sind H, Cl und -$CH_3$, bevorzugte Reste $R^3$ und $R^4$ sind H und $C_1$-$C_4$-Alkyl, bevorzugte Reste $R^5$ und $R^6$ sind $C_4$-$C_8$-Alkyl, Cyclohexyl, $C_7$-$C_9$-Aralkyl, Phenyl und Naphthyl, bevorzugter Wert für a, b, c und d ist 1.

Bevorzugte Verbindungen I sind solche, in denen $R^1$ und $R^2$ = H, $R^3$ und $R^4$ = H oder $CH_3$, $R^5$ und $R^6$ = $C_4$-$C_8$-Alkyl oder $C_7$-$C_9$-Aralkyl und a, b, c, d = 1 sind.

Es können sowohl ein als auch mehrere UV-Absorber der Formel I im Gemisch eingesetzt werden.

Die vorstehend genannten linearen thermoplastischen Si-freien Polycarbonate sind in Praxis und Literatur bekannt oder nach literaturbekannten Verfahren erhältlich.

Den linearen, Si-freien Polycarbonaten liegen als Diphenole vorzugsweise solche der Formel (D)

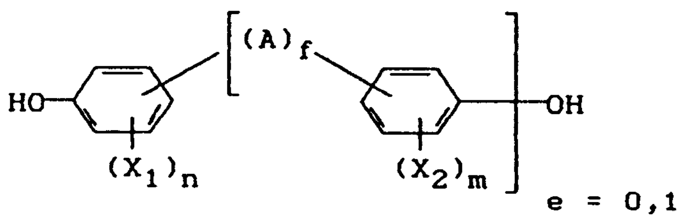

(D)

zugrunde, welche als solche wiederum literaturbekannt sind oder nach literaturbekannten Verfahren herstellbar sind.

In (D) sind

A $C_1$-$C_8$-Alkylen, $C_2$-$C_8$-Alkyliden, $C_5$-$C_{15}$-Cycloalkylen bzw. -Cycloalkyliden, $C_7$-$C_{18}$-Aralkyl, wie z.B.

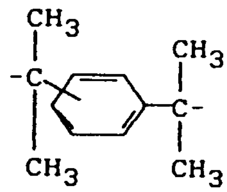 oder 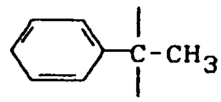 , -S-,

-SO-, $-SO_2-$, -O- oder 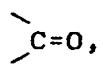,

e, f unabhängig voneinander 0 oder 1,

$X^1$, $X^2$ gleich oder verschieden und bedeuten H, Halogen oder $C_1$-$C_4$-Alkyl,

n, m unahängig voneinander 0, 1, 2, 3 oder 4.

Geeignete Bisphenole sind beispielsweise Hydrochinon, Resorcin, 4,4'-Dihydroxydiphenyl, Bis-(hydroxyphenyl)-alkane, -cycloalkane, -ether, -ketone, -sulfoxide, -sulfonate, -sulfide, ferner $\alpha,\alpha$-Bis-(hydroxypenyl)-ethylbenzol und -diisopropylbenzol sowie die entsprechenden kernalkylierten bzw. -halogenierten Verbindungen.

Alkylgruppenhaltige Bisphenole können auch in Form der z.T. oder völlig durch Fluoralkylgruppen oder teilweise fluorierten Alkylgruppen substituierten Bisphenole eingesetzt werden, wie z.B. das Bis-(4-hydroxyphenyl)-hexafluorpropan-2,2.

Es können auch beliebige Mischungen der vorgenannten Diphenole verwendet werden.

Bevorzugt sind Polycarbonate auf der Basis von Bis(4-hydroxyphenyl)-propan-2,2 (Bisphenol A), Bis(4-hydroxy-3,5-dichlorphenyl)-propan-2,2 (Tetrachlorbisphenol A), Bis(4-hydroxy-3,5-dibromphenyl)-propan-2,2 (Tetrabrombisphenol A), Bis(4-hydroxy-3,5-dimethylphenyl)-propan-2,2 (Tetramethylbisphenol A), Bis(4-hydroxyphenyl)-cyclohexan-1,1 (Bisphenol Z), bis (4-hydroxy-3,5-dimethylphenyl)-sulfon (Dixylenolsulfon) sowie auf der Basis von Dreikernbisphenolen wie $\alpha,\alpha$-Bis(4-hydroxyphenyl)-p-diisopropylbenzol und Mischungen dieser Verbindungen.

Die erfindungsgemäß zu schützenden Formkörper sind vorzugsweise Platten, Stegplatten, Profile, Stegprofile, Folien, Hohlkammerplatten und Bauteile jeglicher Art, also beispielsweise Lampengehäuse, Schutzscheiben, Abdeckplatten und ähnliches. Die Herstellung derartiger Formkörper durch Extrusion ist bekannt. Im Falle der Platten sollen diese vorzugsweise eine Dicke von 0,5 mm bis 30 mm haben.

UV-Absorber-haltige Kunststoffe sind bekannt (siehe beispielsweise US-Patent 3 004 896, Kunststoffe 74 (1984) Seiten 620 bis 623, Taschenbuch der Kunststoff-Additive, 2. Ausgabe, Dr. F. Gugumus, "Lichtschutzmittel für thermoplastische Kunststoffe" Seiten 124 ff und US-Patent 2 965 578).

Die Coextrusion von thermoplastischen Kunststoffen ist ebenfalls bekannt (siehe beispielsweise "Grundzüge der Coextrusion von Platten und Folien" Kunststoffberater 10 (1976) Seiten 538 bis 541, DE-OS 2 832 676, EP-OS 0 065 619, EP-PS 0 110 221 und DE-OS 3 244 953), wobei aus diesem angezogenen Stand der Technik auch die Beschichtung von Kunststoffen mit UV-Absorber-haltigen Kunststoffen hervorgeht. Diese Verfahren haben jedoch immer mit der potentiellen Migration des UV-Absorbers Probleme, vor allem dann, wenn für die Herstellung von Hohlkammerprofilen die Coextrusion unter Vakuum erfolgen muß. Aus diesem Grund muß man, um sicher zu gehen, auf ein Zweischichtverfahren übergehen (siehe DE-OS 3 244 953 und EP-OS 0 110 238), was jedoch einen zusätzlichen Verfahrensaufwand erforderlich macht.

Eine andere Möglichkeit besteht in der Verwendung von polymeren UV-Absorbern (siehe beispielsweise DE-OS 2 231 531, DE-OS 2 231 532, EP-OS 0 141 140, DE-OS 3 424 066 und DE-OS 3 424 555). Die Verwendung von derartigen polymeren UV-Absorbern hat jedoch den Nachteil daS Unverträglichkeiten zwischen UV-Absorber und zu schützender Matrix auftreten können.

Zudem sind die z.B. bekannten polymeren UV-Absorber inhärent UV-instabil und/oder führen zur Versprödung der zu schützenden Matrix (z.B. bei polymeren UV-Absorbern auf PMMA-Basis für Polycarbonat).

Bekannt ist außerdem die Beschichtung von Polyacrylat- oder Polycarbonat-Formkörpern mittels UV-Absorberhaltigen Lösungen von den gleichen oder anderen Thermoplasten (siehe DE-OS 1 694 273). Ein derartiges Verfahren hat jedoch den Nachteil der notwendigen Trocknung und Härtung der Beschichtungen bei gleichzeitig technisch aufwendiger Handhabung großer Formteile.

Bekannt ist auch das Imprägnieren von Polycarbonaten mit UV-Absorber-haltigen Lösungen (siehe beispielsweise US-Patent 3 617 330 und US-Patent 3 892 889). Dieses Verfahren hat jedoch ebenfalls den Nachteil des zusätzlichen Trocknungsschrittes und der komplizierten Handhabung großer Formteile und

Bäder.

Die erfindungsgemäß einzusetzenden UV-Absorber der Formel (I) sind bekannt (siehe beispielsweise DE-OS 1 670 951, tschechische Patentschrift 146 360, EP-OS 0 180 993, EP-OS 0 180 991 und EP-OS 0 180 992).

Hierbei erfolgt der Einsatz sowohl in Kunststoffen (siehe DE-OS 1 670 951) als auch in Lacken (siehe EP-OS 0 180 991).

Die Verwendung der UV-Absorber der Formel (I) in verzweigten beziehungsweise Si-haltigen Polycarbonaten ist Gegenstand der älteren, nicht vorveröffentlichten EP-A-247 480, beziehungsweise EP-A-284 865.

Die Verwendung von UV-Absorbern der Formel I ist bis jetzt in vier verschiedenen Anmeldungen beschrieben worden. In der DE-OS 1 670 951 wir die Verwendung von Alkylen-bis-(benzotriazolylphenolen) als UV-Absorber in Polyolefinen, Polyestern, PVC und Polyvinylidenchlorid, insbesondere in Polyethylen, Polypropylen, Polycarbonat und Polyvinylchlorid beschrieben, Die EP-A 0 180 991 beschreibt den UV-Schutz von thermisch härtbaren Lackharzkompositionen auf der Basis von Acryl-, Alkyl- oder ungesättigten Polyesterharzen. Die EP-A 0 180 992 beschreibt ein Stabilisatorsystem, bestehend aus einem UV-Absorber der Formel I und einem 2,2,6,6-Tetramethylpiperidin-Derivat zur UV-Schutzausrüstung von PVC, Poly-$\alpha$-olefinen, ABS-Terpolymeren und Polyurethanharzen, Die vierte Anmeldung ist die japanische Offenlegungsschrift 62-146 951.

Allen vier Anmeldungen ist gemeinsam, daß die UV- und bewitterungsgeschützten Kompositionen durch Mischen des bzw. der UV-Absorber mit den zu schützenden Polymeren hergestellt werden.

Es lag jedoch nicht nahe, diese speziellen UV-Absorber in Deckschichten via Coextrusion auf Formkörper aus lichtempfindlichen, thermoplastischen Kunststoffen aufzubringen, weil die erhaltenen, beschichteten Formkörper eine überraschend günstige Eigenschaftskombination aufweisen, nämlich die einer geringen elektrostatischen Aufladbarkeit verbunden mit einem besseren Bewitterungsverhalten, als dies nach dem Zwischenschichtverfahren - selbst unter Verwendung von UV-Absorbern der Formel I - möglich ist. Neben geringeren Werten der Vergilbung wird - und dies ist besonders überraschend - auch ein höheres Zähigkeitsniveau gemessen. Ebenfalls überraschend ist die geringe elektrostatische Aufladbarkeit derartig coextrudierter Formkörper. Eine Stegdoppelplatte aus Polycarbonat, ausgerüstet mit einer 40 $\mu$m dicken Schicht, bestehend aus 90 Gew.-Teilen Polycarbonat und 10 Gew.-Teilen eines UV-Absorbers der Formel I ($R^{1-4}$ = H, $R^{5,6}$ = i-Octyl, c,d = 1), weist nach 50 maligem Reiben mit einem Dralontuch eine um die Hälfte geringere elektrostatische Aufladung auf als unbeschichtetes Polycarbonat auf.

Das erfindungsgemäße Verfahren weist damit gegenüber dem Stand der Technik die Vorteile der vereinfachten Herstellung und verbesserten Schutzausrüstung von großflächigen Thermoplastformkörpern unterschiedlicher Dicke gegen UV-Licht und Bewitterung auf.

Gegenstand der vorliegenden Erfindung ist somit auch ein Verfahren zur Herstellung der erfindungsgemäßen, beschichteten Formkörper aus linearen, thermoplastischen, Si-freien Polycarbonaten, das dadurch gekennzeichnet ist, daß man die Formkörper mittels Coextrusion mit der Schicht, die den UV-Absorber der Formel I enthölt, beschichtet.

Die Einarbeitung der UV-Absorber der Formel I in die als Deckschichten zu verwendenden, thermoplastischen Kunststoffe erfolgt nach üblichen Methoden, beispielsweise durch Vermischen der UV-Absorber mit dem Kunststoffgranulat oder Kunststoffpulver in Substanz oder durch Vermischen von Lösungen der UV-Absorber mit Lösungen der Kunststoffe in geeigneten organischen Lösungsmitteln wie $CH_2Cl_2$, Halogenalkane, Halogenaromaten, Chlorbenzol, Xylole u.a. Die Substanzgemische werden dann in bekannter Weise via Extrusion homogenisiert; die Lösungsgemische werden in bekannter Weise nach Ausdampfen des Lösungsmittels beispielsweise compoundiert.

Das erfindungsgemäße Aufbringen der Deckschichten via Coextrusion erfolgt in bekannter Weise auf den für die Coextrusion bekannten Extrudern.

Ein bevorzugtes Verfahren der Coextrusion erfolgt beispielsweise nach dem Adapterverfahren (siehe Beispiele).

Sowohl die linearen thermoplastischen Si-freien Polycarbonate, die als Kernschicht eingesetzt werden, als auch die linearen thermoplastischen Si-freien Polycarbonate der Deckschicht, können die üblichen Additive enthalten, wie Füllstoffe, Verstärkungsstoffe, Flammschutzmittel, Pigmente, Antistatika, Farbstoffe, Gleitmittel und/oder Entformungsmittel. Sie können in üblicher Weise eingearbeitet werden.

Beispiele:

Erfindungsgemäß eingesetzter UV-Absorber

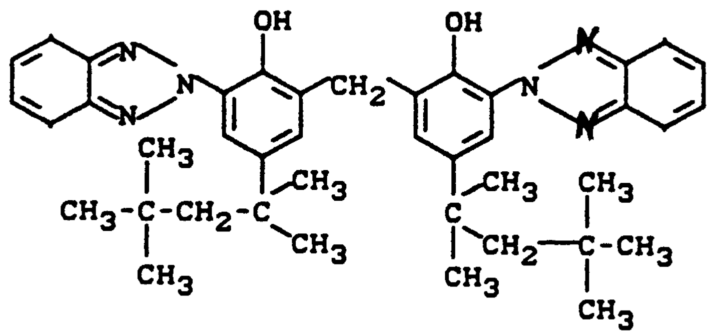

I

Zum Vergleich eingesetzter UV-Absorber

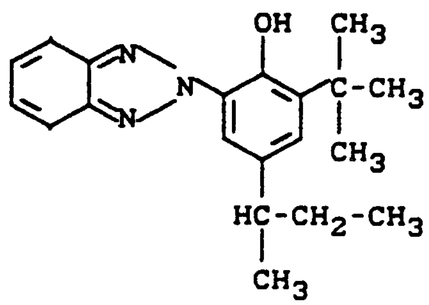

II

Homopolycarbonat

Mit Phenol als Kettenabbrecher geregeltes Polycarbonat auf Basis Bisphenol A mit einer relativen Losungsviskosität von 1,31 (gemessen bei 25 ° C in 0,5 %iger Lösung in Dichlormethan).

Herstellung der UV-Absorber-haltigen Deckschichtcompounds

Die UV-Absorber wurden zu 10 Gew.-% bei 280 ° C und 80 U/min auf einem Doppelwellenextruder (ZSK 32, Werner & Pfleiderer) in den Thermoplasten eingearbeitet und das Extrudat granuliert.

Einschichtcoextrusion von Stegdoppelplatten

Die einfach beschichteten Kunststoffplatten (Kernschicht 10 mm, Deckschicht 40 µm) wurden mit Hilfe einer Breitschlitzdüse nach dem Adapterverfahren kontinuierlich coextrudiert. Um eine Verformung des noch heißen Stegdoppelplattenstranges zu verhindern, wird dieser nach Verlassen der Düse über einen Kalibrator geführt. Schließlich erfolgt der Zuschnitt auf die vorgegebene Plattenlänge.

Mit dem erfindungsgemäß einzusetzenden UV-Absorber I kann dieses Einschichtverfahren über längere Produktionszeiträume, ohne daß Störungen an Anlagenteilen oder am Produkt auftreten, durchgeführt werden. Der Einsatz des UV-Absorbers II führt sehr schnell zu Ausdampf- und Ablagerungsproblemen. Die Kalibratoren verstopfen und/oder die optische Qualität der Platten wird beeinträchtigt.

Vergleich

Zum Vergleich wurden ebenfalls nach dem Adapterverfahren coextrudierte Stegdoppelplatten mit zwei Deckschichten derart hergestellt, daß auf die hoch UV-Absorber-haltige erste Deckschicht der Einschichtvariante eine weitere dünne Deckschicht (10 µm), jedoch mit geringerem UV-Absorbergehalt (0,3 Gew.-%), aufgetragen wurde.

Prüfung

Die Bewitterung dieser Platten erfolgte im Weather-o-meter der Fa. Atlas, USA, mit einem 6,5 W-Xenon-Brenner bei einem Zyklus von 102 min Belichtung und 18 min Besprühung mit entmineralisiertem Wasser unter Belichtung. Die maximale Schwarztafeltemperatur betrug 60 ° C (±5 ° C). Nach jeweils 1000 h wurden die Platten gemustert und zur praxisnahen Prüfung der Zähigkeit ein an Stegmehrfachplatten in Anlehnung an DIN 53 443 entwickelter, modifizierter Kugelfallversuch durchgeführt, bei dem mittels eines Durchstoßkörpers von 5 mm Durchmesser, welcher eine ähnliche biaxiale Beanspruchung hervorrufen soll, wie ein herabfallendes Hagelkorn, die Schädigungsarbeit $W_5$ gemessen wird, Bei Raumtemperatur schlägt eine Fallmasse von 36 kg aus 0,2 m Fallhöhe auf die Probekörper, die auf einem Auflagering von 20 mm Innendurchmesser frei aufliegen.

Es wird mit der bewitterten Seite des Probekörpers in Druckzone geprüft. Das Bruchbild (BB) wird durch Zahlen charakterisiert: 1 = spitternd, 2 = glatter Riß, 3 = zähspröd, 4 = zäh.

Als Yellowness Index YI wird der nach DIN 6167 ermittelte Gelbwert angegeben.

Der Glanzwert der Platten wird bei einem Einstrahlungswinkel von 60 ° nach DIN 67 530 ermittelt.

Die Tabellen 1 und 2 enthalten die Daten der hergestellten Stegdoppelplatten bzw. die Bewitterungsergebnisse.

**Tabelle 1**

| Versuch | Trägerschicht[1)] | Mittelschicht | Deckschicht |
|---|---|---|---|
| Einschichtplatte (A) | PC | - | PC + 10 % UV-Absorber I |
| Zweischichtplatte (B1) | PC | PC + 10 % UV-Absorber I | PC + 0,3 % UV-Absorber I |
| Zweischichtplatte (B2) | PC | PC + 10 % UV-Absorber II | PC + 0,3 % UV-Absorber II |

1) Polycarbonat, $M_w$ = 30 000

**Tabelle 2**

| Versuch | Bewitterung Xenon WOM | | | | | | |
|---|---|---|---|---|---|---|---|
| | Glanz (60°C) | | YI | | $W_s$ (J) | | BB |
| | 0 h | 500 h 1000 h | 0 h | 500 h 1000 h | 0 h | 500 h 1000 h | 500 h 1000 h |
| A | 123 | 116 | 1,3 | 5,2 | 2,3 | 2,3 | 4 |
| B1 | 129 | 113 | 1,5 | 6,2 | - | - | 4 |
| B2 | - | - | 2,0 | 6,8 | 2,0 | 1,1 | 3 |

## Patentansprüche

1. Mit einer 5 µm bis 100 µm dicken Schicht aus linearen, thermoplastischen Si-freien Polycarbonaten beschichtete Formkörper aus linearen thermoplastiscen Si-freien Polycarbonaten, dadurch gekennzeichnet, daß die Schicht 0,1 Gew.-% bis 20 Gew.-% an UV-Absorbern der Formel I enthält,

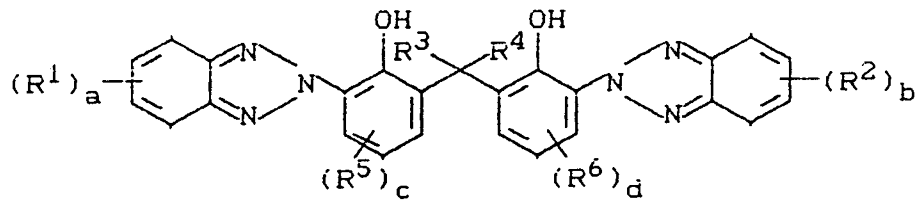

(I)

worin

| | |
|---|---|
| $R^1$ und $R^2$ | gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, $-OR^7$ oder $-COOR^7$ bedeuten, mit $R^7$ = H, $C_1$-$C_{10}$-Alkyl, $C_5$-$C_{10}$-Cycloalkyl, $C_7$-$C_{13}$-Aralkyl, $C_6$-$C_{14}$-Aryl, |
| $R^3$ und $R^4$ | gleich oder verschieden sind und H, $C_1$-$C_{15}$-Alkyl, $C_5$-$C_6$-Cycloalkyl, $C_7$-$C_{20}$-Aralkyl oder $C_6$-$C_{14}$-Aryl bedeuten, |
| $R^5$ und $R^6$ | gleich oder verschieden sind und $C_2$-$C_{15}$-Alkyl, $C_5$-$C_{10}$-Cycloalkyl, $C_7$-$C_{20}$-Aralkyl $C_6$-$C_{14}$-Aryl $-OR^7$ oder $-COOR^7$ bedeuten, |
| a, b | gleich oder verschieden und 1, 2, 3 oder 4 sind und |
| c, d | gleich oder verschieden und 1, 2 oder 3 sind. |

2. Formkörper gemäß Anspruch 1, dadurch gekennzeichnet, daß in den UV-Absorbern der Formel I
   $R^1$ und $R^2$ H, Cl oder $CH_3$
   $R^3$ und $R^4$ H oder $C_1$-$C_4$-Alkyl,
   $R^5$ und $R^6$ $C_4$-$C_8$-Alkyl, Cyclohexyl, $C_7$-$C_9$-Aralkyl, Phenyl oder Naphthyl und
   a = b = c = d = 1 sind.

3. Formkörper gemäß Anspruch 2, dadurch gekennzeichnet, daß in den UV-Absorbern der Formel I
   $R^1 = R^2 = H$,
   $R^3$ und $R^4$ H oder $CH_3$ und
   $R^5$ und $R^6$ $C_4$-$C_8$-Alkyl oder $C_7$-$C_9$-Aralkyl sind.

4. Formkörper gemäß Anspruch 1, dadurch gekennzeichnet, daß die Schicht 2 Gew.-% bis 15 Gew.-% an UV-Absorber der Formel I enthält.

5. Formkörper gemäß Anspruch 1, dadurch gekennzeichnet, daß die Deckschicht 20 µm bis 50 µm ist.

6. Beschichtete Formkörper gemäß Anspruch 1, dadurch gekennzeichnet, daß die Deckschicht Flammschutzmittel, Antistatika, Farbstoffe, Gleitmittel und/oder Entformungsmittel enthält.

7. Beschichtete Formkörper gemäß Anspruch 1, dadurch gekennzeichnet, daß die Formkörper Füllstoffe, Verstärkungsstoffe, Flammschutzmittel, Pigmente, Farbstoffe, Gleitmittel und/oder Entformungsmittel enthalten.

8. Verfahren zur Herstellung der Formkörper der Ansprüche 1 bis 5, dadurch gekennzeichnet, daß man die Formkörper mittels Coextrusion mit der Schicht, die den UV-Absorber der Formel I enthält, beschichtet.

## Claims

1. Mouldings of linear, thermoplastic, Si-free polycarbonates coated with a 5 µm to 100 µm thick layer of linear, thermoplastic, Si-free polycarbonates, characterized in that the layer contains 0.1% by weight to 20% by weight of UV absorbers corresponding to the following formula

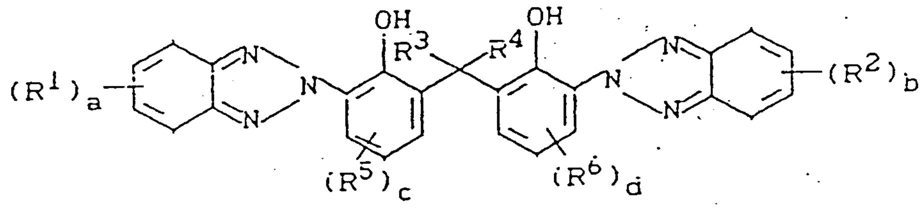

(I)

in which

| | |
|---|---|
| $R^1$ and $R^2$ | may be the same or different and represent H, halogen, $C_{1-10}$ alkyl, $C_{5-10}$ cycloalkyl, $C_{7-13}$ aralkyl, $C_{6-14}$ aryl, $-OR^7$ or $-COOR^7$ where $R^7$ represents H, $C_{1-10}$ alkyl, $C_{5-10}$ cycloalkyl, $C_{7-13}$ aralkyl, $C_{6-14}$ aryl, |
| $R^3$ and $R^4$ | may be the same or different and represent H, $C_{1-15}$ alkyl, $C_{5-6}$ cycloalkyl, $C_{7-20}$ aralkyl or $C_{6-14}$ aryl, |
| $R^5$ and $R^6$ | may be the same or different and represent $C_{2-15}$ alkyl, $C_{5-10}$ cycloalkyl, $C_{7-20}$ aralkyl, $C_{6-14}$ aryl, $-OR^7$ or $-COOR^7$, |
| a, b | may be the same or different and have a value of 1, 2, 3 or 4 and |
| c, d | may be the same or different and have a value of 1, 2 or 3, |

**2.** Mouldings as claimed in claim 1, characterized in that, in the UV absorbers of formula I,

| | |
|---|---|
| $R^1$ and $R^2$ | represent H, Cl or $CH_3$, |
| $R^3$ and $R^4$ | represent H or $C_{1-4}$ alkyl, |
| $R^5$ and $R^6$ | represent $C_{4-8}$ alkyl, cyclohexyl, $C_{7-9}$ aralkyl, phenyl or naphthyl and |

a = b = c = d = 1.

**3.** Mouldings as claimed in claim 2, characterized in that, in the UV absorbers of formula I,
$R^1 = R^2 = H$,
$R^3$ and $R^4$ = H or $CH_3$ and
$R^5$ and $R^6$ = $C_{4-8}$ alkyl or $C_{7-9}$ aralkyl.

**4.** Mouldings as claimed in claim 1, characterized in that the layer contains 2% by weight to 15% by weight of UV absorbers corresponding to formula I.

**5.** Mouldings as claimed in claim 1, characterized in that the surface layer is 20 $\mu$m to 50 $\mu$m thick.

**6.** Coated mouldings as claimed in claim 1, characterized in that the surface layer contains flameproofing agents, antistatic agents, dyes, lubricants and/or mould release agents.

**7.** Coated mouldings as claimed in claim 7, characterized in that the mouldings contain fillers, reinforcing materials, flameproofing agents, pigments, dyes, lubricants and/or mould release agents.

**8.** A process for coating the mouldings claimed in claims 1 to 5, characterized in that the mouldings are coated by co-extrusion with the layer containing the UV absorber of formula I.

**Revendications**

**1.** Articles façonnés en polycarbonates thermoplastiques linéaires exempts de Si revêtus d'une couche de polycarbonates thermoplastiques linéaires exempts de Si épaisse de 5 à 100 $\mu$m, caractérisés en ce que la couche contient 0,1 % en poids à 20 % en poids d'absorbeurs d'UV de formule I

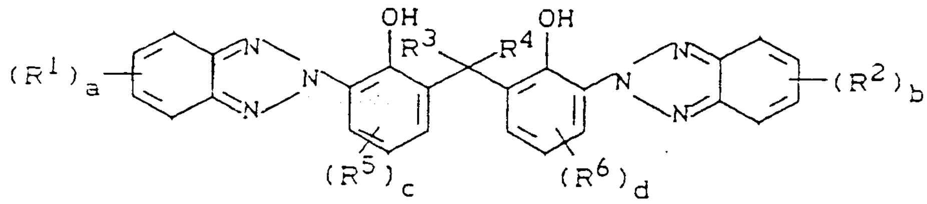

(I)

dans laquelle

$R^1$ et $R^2$ sont identiques ou différents et représentent H, un halogène, un groupe alkyle en $C_1$-$C_{10}$, cycloalkyle en $C_5$-$C_{10}$, aralkyle en $C_7$-$C_{13}$,aryle en $C_6$-$C_{14}$, -$OR^7$ ou -$COOR^7$, $R^7$ représentant H, un groupe alkyle en $C_1$-$C_{10}$, cycloalkyle en $C_5$-$C_{10}$, aralkyle en $C_7$-$C_{13}$, aryle en $C_6$-$C_{14}$,

$R^3$ et $R^4$ sont identiques ou différents et représentent H, un groupe alkyle en $C_1$-$C_{15}$, cycloalkyle en $C_5$-$C_6$, aralkyle en $C_7$-$C_{20}$ ou aryle en $C_6$-$C_{14}$,

$R^5$ et $R^6$ sont identiques ou différents et représentent un groupe alkyle en $C_2$-$C_{15}$, cycloalkyle en $C_5$-$C_{10}$, aralkyle en $C_7$-$C_{20}$, aryle en $C_6$-$C_{14}$,-$OR^7$ ou -$COOR^7$,

a et b sont identiques ou différents et sont égaux à 1, 2, 3 ou 4 et

c et d sont identiques ou différents et sont égaux à 1, 2 ou 3.

**2.** Articles façonnés selon la revendication 1, caractérisés en ce que, dans les absorbeurs d'UV de formule I,

$R^1$ et $R^2$ représentent H, Cl ou $CH_3$,

$R^3$ et $R^4$ représentent H ou un groupe alkyle en $C_1$-$C_4$,

$R^5$ et $R^6$ représentent un groupe alkyle en $C_4$-$C_8$, cyclohexyle, aralkyle en $C_7$-$C_9$, phényle ou naphtyle et

a = b = c = d = 1.

**3.** Articles façonnés selon la revendication 2, caractérisés en ce que, dans les absorbeurs d'UV de formule I,

$R^1$ = $R^2$ = H,

$R^3$ et $R^4$ représentent H ou $CH_3$ et

$R^5$ et $R^6$ représentent un groupe alkyle en $C_4$-$C_8$ ou aralkyle en $C_7$-$C_9$.

**4.** Articles façonnés selon la revendication 1, caractérisés en ce que la couche contient 2 à 15 % en poids d'absorbeurs d'UV de formule I.

**5.** Articles façonnés selon la revendication 1, caractérisés en ce que la couche de revêtement est épaisse de 20 à 50 $\mu m$.

**6.** Articles façonnés revêtus selon la revendication 1, caractérisés en ce que la couche de revêtement contient des agents anti-flammes, des anti-statiques, des colorants, des lubrifiants et/ou des agents de démoulage.

**7.** Articles façonnés revêtus selon la revendication 1, caractérisés en ce que les articles façonnés contiennent des charges, des substances de renforcement, des agents anti-flammes, des pigments, des colorants, des lubrifiants et/ou des agents de démoulage.

**8.** Procédé de fabrication des articles façonnés des revendications 1 à 5, caractérisé en ce que l'on revêt les corps façonnés de la couche qui contient l'absorbeur d'UV de formule I par extrusion en couches multiples.